# FASCICULE DE BREVET EUROPEEN

(11) **EP 2 554 479 B1**
(45) Date de publication et mention de la délivrance du brevet: **06.07.2016**
(21) Numéro de dépôt: 12305929.7
(22) Date de dépôt: 30.07.2012
(51) Int. Cl.: B64D 33/02, F01D 21/04, F02C 7/04

(54) **Dispositif de liaison plus particulièrement adapté pour assurer la liaison entre une entrée d'air et une motorisation d'une nacelle d'aéronef**
Speziell angepasste Verbindungsvorrichtung zur Sicherstellung der Verbindung zwischen einem Lufteinlass und der Motorisierung einer Luftfahrzeuggondel
Linking device more specifically suited to providing the link between an air intake and an engine of an aircraft nacelle

(30) Priorité: 05.08.2011 FR 1157200
(43) Date de publication de la demande: 06.02.2013
(73) Titulaire: Airbus Opérations SAS, 31060 Toulouse (FR)
(72) Inventeur: Porte, Alain, 31770 Colomiers (FR); Dida, Stéphane, 31470 Fontenilles (FR); Fargues, Matthieu, 82000 Montauban (FR); Marro, Martial, 31830 Plaisance Du Touch (FR)
(74) Mandataire: Fantin, Laurent

(56) Documents cités:
- EP-A1- 0 898 063
- EP-A1- 1 277 919
- EP-A1- 2 481 936
- EP-A2- 1 777 377
- FR-A1- 2 936 223

## Description

La présente invention se rapporte à une nacelle d'aéronef comportant un dispositif de liaison plus particulièrement adapté pour assurer la liaison entre une entrée d'air et une motorisation d'une nacelle d'aéronef.

Un ensemble propulsif d'aéronef comprend une nacelle dans laquelle est disposée de manière sensiblement concentrique une motorisation reliée par l'intermédiaire d'un mât au reste de l'aéronef.

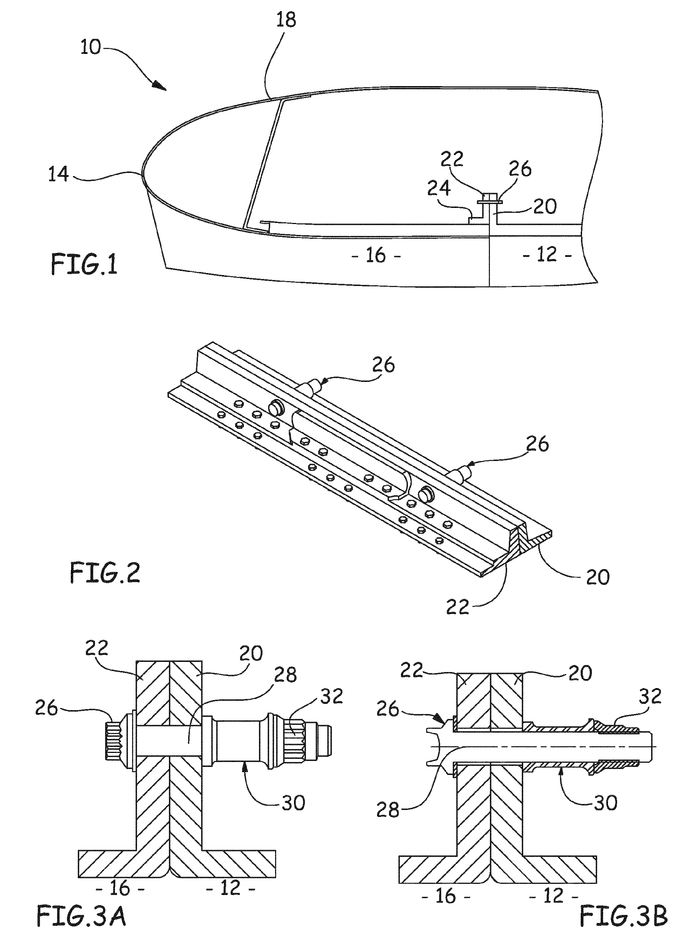

Le document FR 2936223 divulgue une nacelle comportant un dispositif de liaison avec les caractéristiques du préambule de la revendication 1. Comme illustré sur la figure 1, la nacelle comprend à l'avant une entrée d'air 10 permettant de canaliser un flux d'air en direction de la motorisation 12.

L'entrée d'air 10 comprend une lèvre 14 dont la surface en contact avec les flux aérodynamiques est prolongée à l'intérieur de la nacelle par un conduit intérieur 16 et à l'extérieur de la nacelle par une paroi extérieure 18.

L'entrée d'air 10 est reliée à la motorisation 12 par un dispositif de liaison illustré en détails sur les figures 1, 2, 3A et 3B. Ce dispositif de liaison comprend au niveau de la motorisation une première collerette annulaire 20 solidarisée à une seconde collerette annulaire 22 d'un panneau délimitant le conduit 16 ou d'une pièce intercalaire 24, appelée bride, reliée au panneau délimitant le conduit 16. Les deux collerettes 20 et 22 sont plaquées l'une contre l'autre et maintenues ainsi par des éléments de liaison 26, par exemple des boulons ou des rivets, qui traversent les collerettes 20, 22 et s'étendent parallèlement à l'axe longitudinal de la nacelle.

Selon un mode de réalisation illustré sur la figure 3A, les boulons ou rivets 26 comprennent une tige 28 dont le diamètre peut être ajusté à celui des trous de passage ménagés dans les collerettes annulaires 20 et 22.

Selon un second mode de réalisation illustré sur la figure 3B, le diamètre des trous de passage ménagés dans les collerettes annulaires 20 et 22 peut être légèrement supérieur à celui de la tige 28 des boulons ou rivets 26. Ce jeu entre les trous de passage et les boulons ou rivets 26 autorise un mouvement relatif entre les deux éléments reliés.

Dans les deux cas, les trous de passage sont cylindriques.

Le dispositif de liaison et plus particulièrement les boulons ou rivets 26 sont dimensionnés pour pallier aux éventuels risques d'incidents, comme par exemple le bris d'une pale de la soufflante.

Dans ce cas, le conduit de la motorisation peut se déformer sur toute ou une partie de sa périphérie. Lors de ces déformations, les trous de passage de la collerette annulaire de la motorisation ne sont plus disposés au droit de ceux de l'entrée d'air. Dans cette configuration, les boulons ou rivets 26 subissent notamment des contraintes de cisaillement relativement importantes, nettement supérieures aux contraintes subies en fonctionnement normal. Même si le second mode de réalisation autorise un mouvement relatif entre les deux pièces reliées en raison du jeu présent autour des boulons ou rivets 26, ce jeu est nettement inférieur au mouvement relatif entre les deux pièces reliées en cas d'incident comme le bris d'une pale. Dans le cas du second mode de réalisation avec jeu, on constate que les contraintes de cisaillement sont au moins égales à celles présentes pour le premier mode de réalisation, voire supérieures.

Pour résister à de telles contraintes, le dispositif de liaison comprend un nombre donné de boulons ou rivets 26 avec un diamètre donné.

Compte tenu de la résistance d'un boulon ou rivet 26 dans un montage conforme aux modes de réalisation illustrés sur les figures 3A et 3B, cela conduit à prévoir pour le dispositif de liaison un grand nombre de boulons ou rivets 26 et/ou des boulons ou rivets 26 avec un diamètre important, ce qui engendre une masse embarquée plus importante et par conséquent une consommation énergétique plus importante de l'aéronef.

Selon une autre problématique, les déformations du conduit de la motorisation tendent à se propager en direction du conduit 16 de l'entrée d'air. Par conséquent, il est nécessaire de tenir compte de ces éventuelles déformations lors de la conception du conduit 16 de l'entrée d'air qui est généralement en matériau composite et intègre un système de traitement acoustique.

Pour limiter la propagation des déformations de la collerette annulaire 20 de la motorisation vers la collerette 22 de l'entrée d'air, il est possible de prévoir un filtre au niveau des éléments de liaison 26. Pour chaque dispositif de liaison, ce filtre comprend au moins un fourreau déformable 30 enfilé sur la tige 28 de l'élément de liaison 26. Selon l'exemple illustré sur la figure 3A, le fourreau déformable 30 est intercalé entre la collerette annulaire 20 reliée à la motorisation et un écrou 32 de l'élément de liaison 26. Ce fourreau déformable 30 a un diamètre intérieur ajusté à celui de la tige 28 et comprend en partie centrale une épaisseur relativement faible de manière à pouvoir se déformer, notamment par flambage. Cet agencement permet d'augmenter l'énergie absorbée par déformation du dispositif de liaison. Il permet également de limiter la propagation des déformations selon la direction axiale.

Toutefois en cas de bris d'une pale, les déformations les plus importantes sont orientées selon la direction radiale. Or, les effets du fourreau déformable 30 selon cette direction sont limités.

Aussi, la présente invention vise à proposer une nacelle d'aéronef comportant un dispositif de liaison plus particulièrement adapté pour relier une motorisation et une entrée d'air d'une nacelle d'aéronef permettant de limiter la propagation des déformations entre les deux éléments assemblés, notamment selon la direction radiale.

A cet effet, l'invention a pour objet une nacelle d'aéronef comportant un dispositif de liaison comme défini dans les revendications 1 et 3

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef,
- la figure 2 est une vue en perspective illustrant une partie d'une liaison entre un moteur et une entrée d'air d'une nacelle d'aéronef selon l'art antérieur,
- la figure 3A est une coupe illustrant un élément de liaison entre un moteur et une entrée d'air d'une nacelle d'aéronef selon un premier mode de réalisation de l'art antérieur,
- la figure 3B est une coupe illustrant un élément de liaison entre un moteur et une entrée d'air d'une nacelle d'aéronef selon un autre mode de réalisation de l'art antérieur,
- la figure 4 est une coupe illustrant un dispositif de liaison entre un moteur et une entrée d'air d'une nacelle d'aéronef selon un premier mode de réalisation de l'invention,
- la figure 5 est une coupe illustrant un dispositif de liaison entre un moteur et une entrée d'air d'une nacelle d'aéronef selon un deuxième mode de réalisation de l'invention,
- la figure 6 est une coupe illustrant un dispositif de liaison entre un moteur et une entrée d'air d'une nacelle d'aéronef selon un troisième mode de réalisation de l'invention,
- la figure 7 est une vue latérale du dispositif de liaison illustré sur la figure 6,
- la figure 8 est une vue latérale d'un dispositif de liaison entre un moteur et une entrée d'air d'une nacelle d'aéronef selon un quatrième mode de réalisation de l'invention,
- la figure 9 est une coupe du dispositif de liaison illustré sur la figure 8 selon une ligne de coupe AA,
- la figure 10 est une coupe du dispositif de liaison illustré sur la figure 8 selon une ligne de coupe BB, et
- la figure 11 est une vue de face d'un dispositif de liaison selon une variante de réalisation.

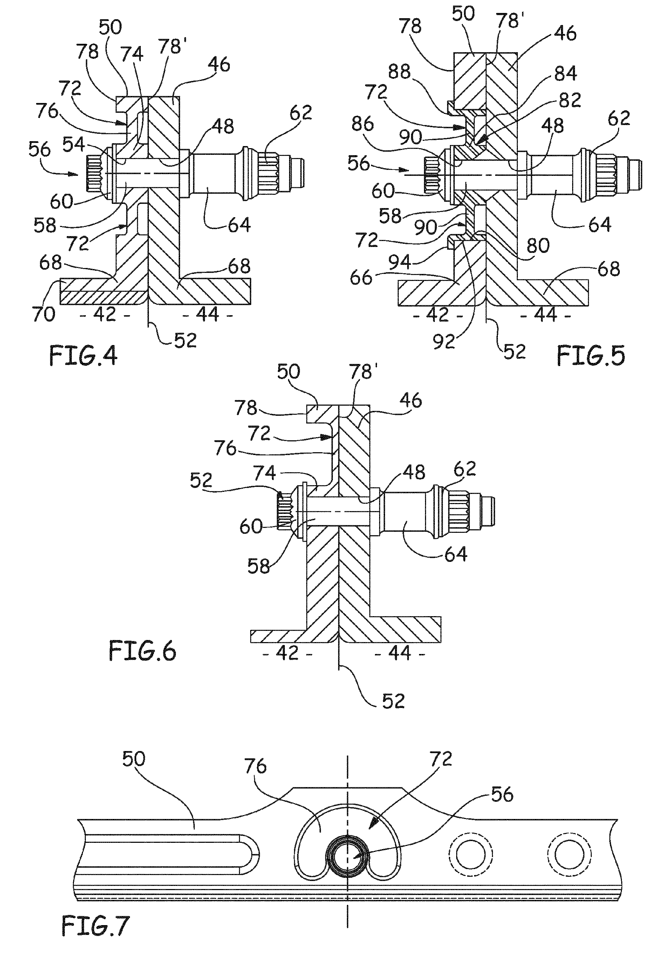

Sur les figures 4 à 10, on a représenté en coupe la zone de jonction entre un premier conduit d'une entrée d'air 42 et un second conduit d'une motorisation 44 d'une nacelle d'aéronef les deux conduits étant disposés bout-à-bout. Le plan de coupe contient l'axe longitudinal de la nacelle et l'axe d'un élément de liaison.

Selon un mode de réalisation, le dispositif de liaison entre une motorisation et une entrée d'air comprend au niveau de la motorisation une collerette annulaire 46 s'étendant dans un plan sensiblement perpendiculaire à l'axe longitudinal de la nacelle et comportant une pluralité de trous de passage 48, au niveau de l'entrée d'air une collerette annulaire 50 s'étendant dans un plan sensiblement perpendiculaire à l'axe longitudinal de la nacelle, plaquée contre la collerette annulaire 46 de la motorisation au niveau d'un plan de jonction référencé 52 et comportant une pluralité de trous de passage 54 disposés au droit des trous de passage 48 de la motorisation et des éléments de liaison 56 répartis sur la périphérie des collerettes annulaires 46 et 50 logés dans les trous de passage 48 et 54.

Selon les cas, une collerette annulaire peut être réalisée d'un seul tenant avec la motorisation ou l'entrée d'air ou se présenter sous la forme d'une bride reliée à la motorisation ou l'entrée d'air.

Chaque élément de liaison 56 comprend une tige 58 sous forme d'un cylindre avec à une première extrémité un premier appui 60 susceptible d'être plaqué contre la face libre d'une des collerettes, à l'occurrence la collerette annulaire 50 de l'entrée d'air, et à l'autre extrémité un second appui 62 susceptible d'être plaqué contre la face libre de l'autre collerette, à l'occurrence la collerette annulaire 46 de la motorisation.

Selon un mode de réalisation, un élément de liaison 56 peut se présenter sous la forme d'un boulon, avec d'une part une vis comportant une tige avec à une première extrémité une tête (correspondant au premier appui 60) et à l'autre extrémité un filetage, et d'autre part un écrou (correspondant au second appui 62) se vissant à l'extrémité de la vis.

En variante, l'élément de liaison peut se présenter sous la forme d'un rivet avec une tige comportant à une première extrémité une tête formant un premier appui et dont l'autre extrémité est déformée de manière à former le second appui.

Avantageusement, l'élément de liaison 56 comprend un fourreau déformable 64 qui peut être enfilé sur la tige 58 et interposé entre l'une des collerettes et l'un des appuis. Selon l'exemple illustré, le fourreau déformable 64 est intercalé entre la collerette annulaire 46 de la motorisation et l'appui 62 formé par un écrou de l'élément de liaison. Ce fourreau déformable 64 a un diamètre intérieur ajusté à celui de la tige 58 et comprend en partie centrale une épaisseur relativement faible de manière à pouvoir se déformer, notamment par flambage.

Cet agencement permet d'augmenter l'énergie absorbée par déformation du dispositif de liaison et ainsi de limiter la propagation des déformations orientées selon la direction axiale.

L'invention propose un dispositif de liaison permettant d'absorber par déformation plastique et élastique une partie de l'énergie produite lors du choc de la pale contre le conduit de la motorisation et de limiter la propagation des déformations, plus particulièrement les déformations radiales, entre le conduit de la motorisation et le conduit de l'entrée d'air.

Chaque collerette annulaire 46, 50 comprend une zone de jonction 66, 68 la reliant directement à la motorisation ou à l'entrée d'air ou à un conduit 70 (visible sur la figure 4) lui-même relié au conduit de la motorisation ou au conduit de l'entrée d'air.

Le dispositif de liaison comprend une paroi disposée dans un plan perpendiculaire à l'axe de la nacelle comportant au moins une réduction d'épaisseur 72, ladite réduction d'épaisseur 72 étant disposée par rapport à l'élément de de liaison 56 de manière à permettre par déformation un mouvement relatif entre ledit élément de liaison 56 et au moins l'un des conduits de la motorisation et/ou de l'entrée d'air.

De préférence, au niveau de la réduction d'épaisseur, la paroi a une épaisseur e inférieure ou égale à 30% de l'épaisseur E de la paroi en dehors de la réduction d'épaisseur.

En cas de bris d'une pale, le conduit de la motorisation tend à se déformer selon une direction radiale. Cette déformation radiale tend à se propager jusqu'à la zone de réduction d'épaisseur 72. Au niveau de cette zone 72, les contraintes mécaniques sont telles qu'elles provoquent une déformation plastique et élastique de cette zone qui absorbe une partie de l'énergie et limite la propagation des déformations au restant du dispositif de liaison et notamment au conduit de l'entrée d'air.

Selon des exemples illustrés sur les figures 4, 6 et 7, au moins l'une des deux collerettes annulaires comprend une réduction d'épaisseur 72. Dans ce cas, la collerette annulaire 50 comprend au niveau d'au moins un élément de liaison 56 une forme tubulaire 74 dans laquelle est prévu de manière sensiblement concentrique un trou de passage 54 pour l'élément de liaison 56 et, au moins sur une partie de la circonférence de la forme tubulaire 74, une réduction d'épaisseur 72 qui forme un voile déformable 76.

Avantageusement, la forme tubulaire 74 a une hauteur identique à l'épaisseur de la collerette de manière à venir en butée contre l'autre collerette annulaire 46 afin de limiter les mouvements relatifs entre ladite forme tubulaire et l'autre collerette annulaire.

Selon un premier exemple illustré sur la figure 4, la réduction d'épaisseur 72 s'étend sur toute la circonférence de la forme tubulaire 74. Dans ce cas, le voile déformable 76 a une forme d'anneau sensiblement concentrique à la forme tubulaire 74.

Selon un autre exemple illustré sur les figures 6 et 7, la réduction d'épaisseur 72 s'étend seulement sur une partie de la circonférence de la forme tubulaire 74, sur au moins la moitié de la circonférence, de préférence sur un secteur angulaire de l'ordre de 270°. Dans ce cas, le voile déformable 76 est de préférence disposé entre la forme tubulaire 74 et le bord extérieur de la collerette 50. Cet agencement permet au conduit de la motorisation de se déformer radialement vers l'extérieur de la nacelle, au voile déformable 76 de se déformer, notamment par flambage et de limiter la propagation de ces déformations radiales orientées vers l'extérieur au conduit de l'entrée d'air.

Selon les cas, le voile déformable peut être centré par rapport aux faces extérieures 78, 78' de la collerette (figure 4) ou décalé vers l'une ou l'autre des faces extérieures 78, 78' (figure 6).

Selon l'invention illustrés sur les figures 5, 8 à 10, la réduction d'épaisseur 72 peut être réalisée dans une pièce intercalée entre au moins une des collerettes et un élément de liaison 56.

Selon un mode de réalisation illustré sur la figure 5, pour au moins un élément de liaison 56, l'une des collerettes annulaires, plus particulièrement la collerette annulaire 50 liée à l'entrée d'air comprend un orifice 80 d'un diamètre supérieur à celui du trou de passage 54 nécessaire pour l'élément de liaison 56. Une pièce intercalaire 82 en forme de disque est rapportée au niveau de cet orifice 80. Cette pièce intercalaire 82 comprend une forme tubulaire 84 avec un trou de passage 86 adapté au diamètre de l'élément de liaison 56, un anneau périphérique 88 dont le diamètre extérieur est ajusté à celui de l'orifice 80, la forme tubulaire 84 et l'anneau périphérique 88 étant reliés par un voile déformable 90 avec une épaisseur réduite. Cet agencement permet au conduit de la motorisation de se déformer radialement vers l'extérieur de la nacelle, au voile déformable 90 de se déformer, notamment par flambage et de limiter la propagation de ces déformations radiales orientées vers l'extérieur au conduit de l'entrée d'air.

Avantageusement, l'anneau périphérique 88 comprend une portée 92 dont le diamètre est sensiblement égal à celui de l'orifice 80 et un épaulement 94 susceptible de prendre appui contre la face extérieure 78 de la collerette annulaire 50. Cet agencement permet de maintenir la collerette annulaire 50 liée à l'entrée d'air, cette dernière étant immobilisée entre la collerette annulaire 46 liée à la motorisation et l'épaulement 94.

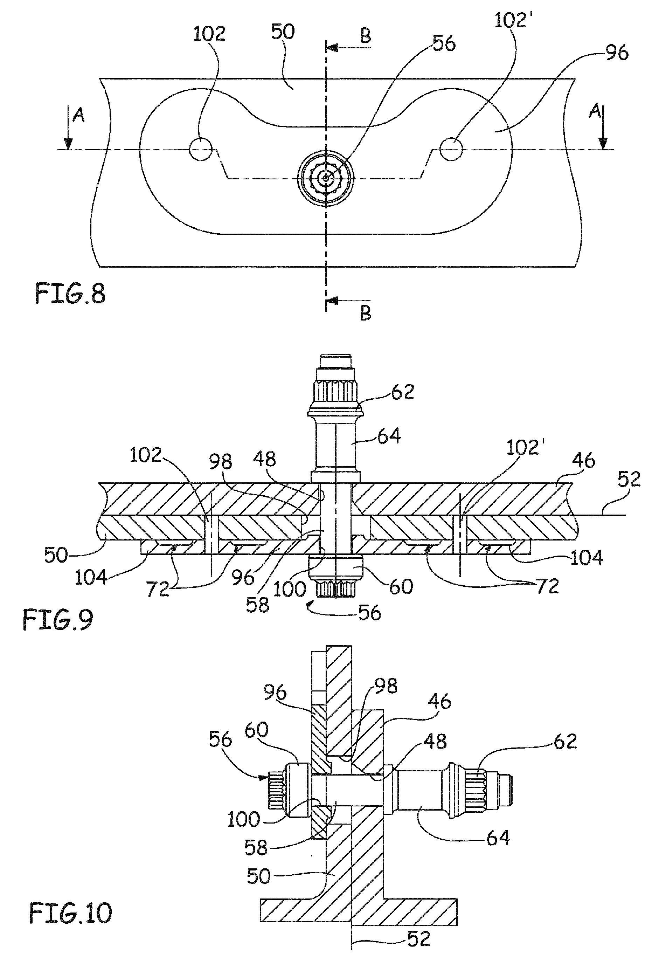

Selon un autre mode de réalisation illustré sur les figures 8 à 10, la réduction d'épaisseur 72 est ménagée dans une rondelle 96.

Comme précédemment, pour au moins un élément de liaison 56, l'une des collerettes annulaires, plus particulièrement la collerette annulaire 50 liée à l'entrée d'air comprend un orifice 98 avec un diamètre supérieur à celui du trou de passage 54 nécessaire pour l'élément de liaison 56.

La rondelle 96 est plaquée contre la face extérieure 78 de la collerette annulaire. Cette rondelle comprend un trou de passage 100 adapté au diamètre de l'élément de liaison 56.

Cette rondelle 96 est reliée à la collerette annulaire 50 par au moins un point de fixation 102. Avantageusement, la rondelle 98 est reliée à la collerette annulaire 50 par deux points de fixation distants 102, 102' sous forme chacun d'un rivet par exemple.

Selon l'invention, la rondelle 96 comprend au moins une réduction d'épaisseur 72 intercalée entre le trou de passage 100 et le ou les points de fixation 102, 102'. Avantageusement, la rondelle 96 comprend deux zones avec une épaisseur réduite entourant les points de fixation 102, 102'. Comme illustré sur la figure 9, la rondelle 96 comprend au niveau de chaque point de liaison une réduction d'épaisseur sous la forme d'un voile déformable 104 en forme d'anneau qui permet de limiter la propagation des déformations.

Indépendamment, les trous de passage 48, 54, 86, 100 peuvent être cylindriques ou avoir une forme évasée au niveau du plan de jonction.

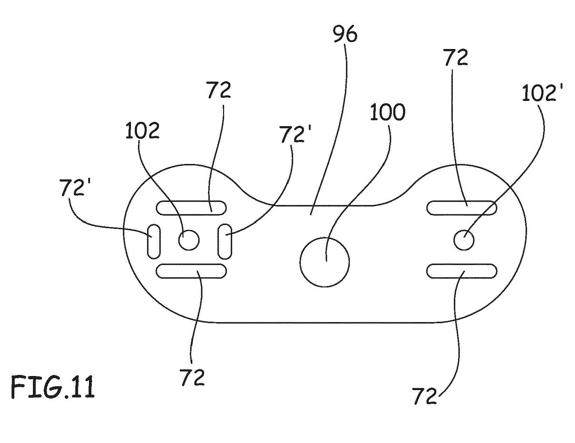

Selon les cas, la réduction d'épaisseur 72 peut s'étendre sur toute la circonférence d'un trou de passage ou non comme illustré sur la figure 11. Lorsqu'elle s'étend sur toute la circonférence, la réduction d'épaisseur 72 peut avoir la même épaisseur ou peut avoir une épaisseur évolutive le long de la circonférence.

Lorsqu'elle ne s'étend pas sur toute la circonférence, comme illustré sur la figure 11, certains points de fixation 102' peuvent être associés à deux réductions d'épaisseur 72, disposées de part et d'autre du point de passage 102' selon la direction radiale. D'autres points de passage 102 peuvent être associés à quatre réductions d'épaisseur, deux réductions d'épaisseur 72 disposées de part et d'autre du point de passage 102 selon la direction radiale et deux réductions d'épaisseur 72' disposées de part et d'autre du point de passage 102 selon la circonférence. Ainsi, un trou de passage ou un point de fixation peut être associé à au moins une réduction d'épaisseur 72, 72'.

Les réductions d'épaisseur 72, 72' n'ont pas nécessairement la même épaisseur. Ainsi, les réductions d'épaisseur 72 peuvent avoir une épaisseur E1 différente de l'épaisseur E2 des réductions d'épaisseur 72'.

## Revendications

1. Nacelle d'aéronef comportant un dispositif de liaison entre un premier conduit d'une entrée d'air (42) et un second conduit d'une motorisation (44) disposée dans ladite nacelle, les deux conduits étant disposés bout à bout, ledit dispositif de liaison comportant une collerette annulaire (50) reliée à l'entrée d'air, une collerette annulaire (46) reliée à la motorisation plaquée contre ladite collerette annulaire (50) de l'entrée d'air, une pluralité de trous de passage (48, 54, 86, 102) ménagés dans les collerettes annulaires (46, 50) et disposés au droit les uns des autres et des éléments de liaison (56) logés dans les trous de passage (48, 54, 86, 100), permettant de relier lesdites collerettes annulaires (46, 50), **caractérisée en ce que** pour au moins un élément de liaison (56), l'une des collerettes annulaires comprend un orifice (80) et **en ce que** le dispositif de liaison comprend une pièce intercalaire (82) en forme de disque rapportée au niveau de l'orifice (80), ladite pièce intercalaire (82) comprenant une forme tubulaire (84) avec un trou de passage (86) pour l'élément de passage (56), un anneau périphérique (88) dont le diamètre extérieur est ajusté à celui de l'orifice (80), la forme tubulaire (84) et l'anneau périphérique (88) étant reliés par une paroi déformable (90) avec une réduction d'épaisseur, ladite réduction d'épaisseur (72, 90) étant disposée par rapport à l'élément de de liaison (56) de manière à permettre par déformation un mouvement relatif entre ledit élément de liaison (56) et le conduit de l'entrée d'air (42) et/ou le conduit de la motorisation (44) suivant une direction perpendiculaire à l'axe de la nacelle.

2. Nacelle d'aéronef comportant un dispositif de liaison selon la revendication 1, **caractérisée en ce que** l'anneau périphérique (88) comprend une portée (92) dont le diamètre est sensiblement égal à celui de l'orifice (80) et un épaulement (94) susceptible de prendre appui contre la face extérieure (78) de la collerette annulaire (50).

3. Nacelle d'aéronef comportant un dispositif de liaison entre un premier conduit d'une entrée d'air (42) et un second conduit d'une motorisation (44) disposée dans ladite nacelle, les deux conduits étant disposés bout à bout, ledit dispositif de liaison comportant une collerette annulaire (50) reliée à l'entrée d'air, une collerette annulaire (46) reliée à la motorisation plaquée contre ladite collerette annulaire (50) de l'entrée d'air, une pluralité de trous de passage (48, 54, 86, 102) ménagés dans les collerettes annulaires (46, 50) et disposés au droit les uns des autres et des éléments de liaison (56) logés dans les trous de passage (48, 54, 86, 100), permettant de relier lesdites collerettes annulaires (46, 50), **caractérisée en ce que** pour au moins un élément de liaison (56), l'une des collerettes annulaires comprend un orifice (98) avec un diamètre supérieur à celui de l'élément de liaison (56) et **en ce que** le dispositif de liaison comprend une rondelle (96) plaquée contre la face extérieure (78) de la collerette annulaire, reliée à ladite collerette annulaire par au moins un point de fixation (102), avec un trou de passage (100) adapté au diamètre de l'élément de liaison (56), ladite rondelle (96) comportant au moins une paroi avec une réduction d'épaisseur (72) intercalée entre le trou de passage (100) et le ou les points de fixation (102, 102'), ladite réduction d'épaisseur (72, 90) étant disposée par rapport à l'élément de de liaison (56) de manière à permettre par déformation un mouvement relatif entre ledit élément de liaison (56) et le conduit de l'entrée d'air (42) et/ou le conduit de la motorisation (44) suivant une direction perpendiculaire à l'axe de la nacelle.

4. Nacelle d'aéronef comportant un dispositif de liaison selon l'une des revendications précédentes, **caractérisée en ce que** la paroi a une épaisseur au niveau de la réduction d'épaisseur (72) inférieure ou égale à 30% de l'épaisseur de la paroi en dehors de la réduction d'épaisseur (72).

5. Nacelle d'aéronef comportant un dispositif de liaison selon l'une des revendications précédentes, **caractérisée en ce qu'**au moins l'une des deux collerettes annulaires (46, 50) comprend une réduction d'épaisseur (72).

6. Nacelle d'aéronef comportant un dispositif de liaison selon la revendication 5, **caractérisée en ce qu'**une collerette annulaire (50) comprend au niveau d'au moins un élément de liaison (56) une forme tubulaire (74) dans laquelle est prévu un trou de passage (54) pour l'élément de liaison (56) et au moins sur une partie de la circonférence de la forme tubulaire (74) une réduction d'épaisseur (72) qui forme un voile déformable (76).

7. Nacelle d'aéronef comportant un dispositif de liaison selon la revendication 6, **caractérisée en ce que** la réduction d'épaisseur (72) s'étend sur toute la circonférence de la forme tubulaire (74).

8. Nacelle d'aéronef comportant un dispositif de liaison selon la revendication 6, **caractérisé en ce que** la réduction d'épaisseur (72) s'étend sur un secteur angulaire de l'ordre de 270°, entre la forme tubulaire (74) et le bord extérieur de la collerette.

## Patentansprüche

1. Gondel eines Luftfahrzeugs mit einer Verbindungsvorrichtung zwischen einem ersten Kanal eines Lufteinlasses (42) und einem zweiten Kanal einer Motorisierung (44), die in der Gondel angeordnet ist, wobei die beiden Kanäle aneinandergefügt sind und die Verbindungsvorrichtung einen ringförmigen Flansch (50), der mit dem Lufteinlass verbunden ist, einen ringförmigen Flansch (46), der mit der Motorisierung verbunden ist und an den ringförmigen Flansch (50) des Lufteinlasses angesetzt ist, eine Vielzahl von Durchgangslöchern (48, 54, 86, 100), die in dem ringförmigen Flansch (46, 50) ausgebildet sind und einander gegenüberliegend angeordnet sind, und Verbindungselemente (56) aufweist, die in den Durchgangslöchern (48, 54, 86, 100) angeordnet sind und die es gestatten, die ringförmigen Flansche (46, 50) zu verbinden, **dadurch gekennzeichnet, dass** für wenigstens ein Verbindungselement (56) einer der ringförmigen Flansche eine Öffnung (80) aufweist und dass die Verbindungsvorrichtung ein scheibenförmiges Zwischenstück (82) aufweist, das in dem Bereich der Öffnung (80) eingebracht ist, wobei das Zwischenstück (82) eine Rohrform (84) mit einem Durchgangsloch (86) für das Durchführungselement (56) und einen äußeren Ring (88) aufweist, dessen äußerer Durchmesser an denjenigen der Öffnung (80) angepasst ist, wobei die Rohrform (84) und der äußere Ring (88) durch eine verformbare Wand (90), die eine Verringerung der Dicke aufweist, verbunden sind, wobei die Verringerung der Dicke (72, 90) bezüglich des Verbindungselements (56) derart angeordnet ist, dass durch eine Verformung eine Relativbewegung zwischen dem Verbindungselement (56) und dem Kanal des Lufteinlasses (42) und/oder dem Kanal der Motorisierung (44) in eine zur Achse der Gondel rechtwinklige Richtung zugelassen ist.

2. Gondel eines Luftfahrzeugs mit einer Verbindungsvorrichtung nach Anspruch 1, **dadurch gekennzeichnet, dass** der äußere Ring (88) eine Auflagefläche (92) aufweist, deren Durchmesser im Wesentlichen gleich demjenigen der Öffnung (80) ist, und einen Ansatz (94), der dazu eingerichtet ist, sich gegen die Außenseite (78) des ringförmigen Flansches (50) abzustützen.

3. Gondel eines Luftfahrzeugs mit einer Verbindungsvorrichtung zwischen einem ersten Kanal eines Lufteinlasses (42) und einem zweiten Kanal einer Motorisierung (44), die in der Gondel angeordnet ist, wobei die beiden Kanäle aneinandergefügt sind und die Verbindungsvorrichtung einen ringförmigen Flansch (50), der mit dem Lufteinlass verbunden ist, einen ringförmigen Flansch (46), der mit der Motorisierung verbunden ist und an den ringförmigen Flansch (50) des Lufteinlasses angesetzt ist, eine Vielzahl von Durchgangslöchern (48, 54, 86, 100), die in dem ringförmigen Flansch (46, 50) ausgebildet sind und einander gegenüberliegend angeordnet sind, und Verbindungselemente (56) aufweist, die in den Durchgangslöchern (48, 54, 86, 100) angeordnet sind, die es gestatten, die ringförmigen Flansche (46, 50) zu verbinden, **dadurch gekennzeichnet, dass** für wenigstens ein Verbindungselement (56) einer der ringförmigen Flansche eine Öffnung (98) mit einem Durchmesser aufweist, der größer als derjenige des Verbindungselements (56) ist, und dass die Verbindungsvorrichtung eine Unterlegscheibe (96) aufweist, die auf die Außenseite (78) des ringförmigen Flansches aufgebracht ist und die mit dem ringförmigen Flansch durch wenigstens einen Befestigungspunkt (102) verbunden ist, mit einem Durchführungsloch (100), das an den Durchmesser des Verbindungselements (56) angepasst ist, wobei die Unterlegscheibe (96) wenigstens eine Wand mit einer Verringerung der Dicke (72) aufweist, die zwischen dem Durchgangsloch (100) und dem oder den Verbindungspunkten (102, 102') angeordnet ist, wobei die Verringerung der Dicke (72, 90) bezüglich des Verbindungselements (56) derart angeordnet ist, dass durch eine Verformung eine Relativbewegung zwischen dem Verbindungselement (56) und dem Kanal des Lufteinlasses (42) und/oder dem Kanal der Motorisierung (44) in eine Richtung im rechten Winkel zur Achse der Gondel zugelassen ist.

4. Gondel eines Luftfahrzeugs mit einer Verbindungsvorrichtung nach einem der vorhergehenden Ansprüche, **dadurch gekennzeichnet, dass** die Wand im Bereich einer Verringerung der Dicke (72) eine Dicke kleiner gleich 30% der Dicke der Wand außerhalb der Verringerung der Dicke (72) aufweist.

5. Gondel eines Luftfahrzeugs mit einer Verbindungsvorrichtung nach einem der vorhergehenden Ansprüche, **dadurch gekennzeichnet, dass** wenigstens einer der ringförmigen Flansche (46, 50) eine Verringerung der Dicke (72) aufweist.

6. Gondel eines Luftfahrzeugs mit einer Verbindungsvorrichtung nach Anspruch 5, **dadurch gekennzeichnet, dass** ein ringförmiger Flansch (50) im Bereich wenigstens eines Verbindungselements (56) eine Rohrform (74) aufweist, in der ein Durchführungsloch (54) für ein Verbindungselement (56) und wenigstens über einen Teil des Umfangs der Rohrform (74) eine Verringerung der Dicke (72) vorgesehen ist, die eine verformbare Hülle (76) bildet.

7. Gondel eines Luftfahrzeugs mit einer Verbindungsvorrichtung nach Anspruch 6, **dadurch gekennzeichnet, dass** sich die Verringerung der Dicke (72) über den gesamten Umfang der Rohrform (74) erstreckt.

8. Gondel eines Luftfahrzeugs mit einer Verbindungsvorrichtung nach Anspruch 6, **dadurch gekennzeichnet, dass** sich die Verringerung der Dicke (72) über einen Winkelbereich in der Größenordnung von 270° zwischen der Rohrform (74) und dem äußeren Rand des Flansches erstreckt.

## Claims

1. Aircraft nacelle comprising a linking device between a first duct of an air intake (42) and a second duct of an engine (44) arranged in said nacelle, the two ducts being arranged end-to-end, said linking device comprising an annular collar (50) connected to the air intake, an annular collar (46) connected to the engine clamped against said annular collar (50) of the air intake, a plurality of through-holes (48, 54, 86, 100) created in the annular collars (46, 50) and arranged in line with one another and connecting elements (56) received in the through-holes (48, 54, 86, 100), making it possible to connect said annular collars (46, 50), **characterized in that**, for at least one linking element (56), one of the annular collars comprises an opening (80) and **in that** the linking device comprises a spacer (82) in the form of a disc inserted into the opening (80), said spacer (82) comprising a tubular shape (84) with a through-hole (86) for the through-element (56), a peripheral ring (88) of which the outer diameter matches that of the opening (80), the tubular shape (84) and the peripheral ring (88) being connected by a deformable wall (90) having a reduction in thickness, said reduction in thickness (72, 90) being arranged relative to the linking element (56) so as to allow, by deformation, a relative movement between said linking element (56) and the duct of the air intake (42) and/or the duct of the engine (44) in a direction perpendicular to the axis of the nacelle.

2. Aircraft nacelle comprising a linking device according to Claim 1, **characterized in that** the peripheral ring (88) comprises a bearing surface (92) of which the diameter is essentially equal to that of the opening (80) and a shoulder (94) which can press against the outer face (78) of the annular collar (50).

3. Aircraft nacelle comprising a linking device between a first duct of an air intake (42) and a second duct of an engine (44) arranged in said nacelle, the two ducts being arranged end-to-end, said linking device comprising an annular collar (50) connected to the air intake, an annular collar (46) connected to the engine clamped against said annular collar (50) of the air intake, a plurality of through-holes (48, 54, 86, 100) created in the annular collars (46, 50) and arranged in line with one another and connecting elements (56) received in the through-holes (48, 54, 86, 100), making it possible to connect said annular collars (46, 50), **characterized in that**, for at least one linking element (56), one of the annular collars comprises an opening (98) with a diameter greater than that of the linking element (56) and **in that** the linking device comprises a washer (96) clamped against the outer face (78) of the annular collar, connected to said annular collar by at least one attachment point (102), with a through-hole (100) matching the diameter of the linking element (56), said washer (96) comprising at least one wall with a reduction in thickness (72) interposed between the through-hole (100) and the one or more attachment points (102, 102'), said reduction in thickness (72, 90) being arranged relative to the linking element (56) so as to allow, by deformation, a relative movement between said linking element (56) and the duct of the air intake (42) and/or the duct of the engine (44) in a direction perpendicular to the axis of the nacelle.

4. Aircraft nacelle comprising a linking device according to one of the preceding claims, **characterized in that** the thickness of the wall at the reduction in thickness (72) is less than or equal to 30% of the thickness of the wall beyond the reduction in thickness (72).

5. Aircraft nacelle comprising a linking device according to one of the preceding claims, **characterized in that** at least one of the two annular collars (46, 50) comprises a reduction in thickness (72).

6. Aircraft nacelle comprising a linking device according to Claim 5, **characterized in that** one annular collar (50) comprises, at at least one linking element (56), a tubular shape (74) in which is provided a through-hole (54) for the linking element (56) and at least over part of the circumference of the tubular shape (74) a reduction in thickness (72) which forms a deformable web (76).

7. Aircraft nacelle comprising a linking device according to Claim 6, **characterized in that** the reduction in thickness (72) extends over the entire circumference of the tubular shape (74).

8. Aircraft nacelle comprising a linking device according to Claim 6, **characterized in that** the reduction in thickness (72) extends over an angular sector of the order of 270°, between the tubular shape (74) and the outer edge of the collar.
